# EUROPÄISCHE PATENTSCHRIFT

(11) **EP 3 699 585 B1**
(45) Veröffentlichungstag und Bekanntmachung des Hinweises auf die Patenterteilung: **05.03.2025**
(21) Anmeldenummer: 20158655.9
(22) Anmeldetag: 21.02.2020
(51) Int. Cl.: G01N 29/04, G01N 29/22, G01N 29/265, B23K 11/00, B23K 11/11, G01N 29/28, B23K 11/16, B23K 11/18, B23K 31/12, B23K 101/00, B23K 101/18, B23K 103/04, B23K 103/10

(54) **VERFAHREN ZUR ÜBERPRÜFUNG EINER SCHWEISSUNG**
METHOD FOR CHECKING A WELD
PROCÉDÉ DE VÉRIFICATION D'UN SOUDAGE

(30) Priorität: 25.02.2019 DE 102019104654; 16.01.2020 DE 202020100206 U
(43) Veröffentlichungstag der Anmeldung: 26.08.2020
(73) Patentinhaber: Battenberg Robotic GmbH & Co. KG, 35043 Marburg (DE)
(72) Erfinder: BATTENBERG, Günther, 35274 Kirchhain (DE)
(74) Vertreter: Stoffregen, Hans-Herbert

(56) Entgegenhaltungen:
- EP-A1- 2 322 897
- DE-A1- 102005 043 776
- DE-A1- 3 122 408
- JP-A- H02 263 157

## Beschreibung

Die Erfindung bezieht sich auf ein Verfahren zur Überprüfung und/oder Korrektur einer Schweißung, wie Schweißpunkt, eines Prüflings, wie Kraftfahrzeug, bzw. eines oder mehrerer Teile eines solchen, umfassend die Verfahrensschritte:
- Ausrichten eines von einem Roboter geführten Ultraschallprüfkopfs auf Soll-Position der Schweißung,
- Ermittlung der Ist-Position der Schweißung mittels eines optischen Sensors und Ausrichten des Ultraschallprüfkopfes auf die Ist-Position und Aufsetzen des Ultraschallprüfkopfes in Normalenrichtung der Schweißung,
- Messen der Schweißung.

Der DE 101 25 782 A1 ist ein Verfahren zur automatisierten Ultraschallprüfung von Widerstandspunktschweißverbindungen zu entnehmen. Dabei ist vorgesehen, dass nach Anfahren einer bekannten Soll-Position des jeweils zu prüfenden Widerstandsschweißpunktes im Wechselspiel mit einer rechnergesteuerten Prüfsignalauswertung in der Robotersteuerung programmierte Bewegungsmodule derart aktiviert werden, dass schrittweise eine Matrix räumlicher Positionen des Ultraschallprüfkopfes abgearbeitet wird, die mit großer Wahrscheinlichkeit eine optimale Position einschließt. Zwischen jeweils zwei Prüfkopfpositionen erfolgt eine Bewertung des Ultraschallsignals, bis ein nach bekannten Kriterien eindeutiges Prüfergebnis vorliegt.

Gegenstand der DE 10 2004 044 342 A1 sind eine Anordnung und ein Verfahren zum automatisierten Ultraschallprüfen räumlich geformter strahlgeschweißter Bauteile. Zum Überprüfen wird ein fünfachsiger Gelenkarmroboter mit einem Prüfkopfträger verwendet, in dem ein Ultraschallprüfkopf mit Ultraschallsender und -empfänger integriert ist.

Die DE 11 2006 000 360 T5 offenbart ein Verfahren zur Überprüfung von Schweißpunkten, wobei zunächst erwartete Lagekoordinaten eines Schweißpunktes einem Industrieroboter vorgegeben werden, sodann der Industrieroboter positioniert und mittels einer optischen Einrichtung der zu prüfende Schweißpunkt erfasst wird. Anschließend wird der Messkopf auf die realen Lagekoordinaten des Schweißpunktes ausgerichtet.

Um Schweißpunkte zu überprüfen, weist nach der DE 10 2017 125 033 A1 ein Industrieroboter ein Messwerkzeug mit einer optischen Einrichtung zur Aufnahme einer Abbildung einer zu prüfenden Schweißverbindung sowie einen Messkopf zur Prüfung der Schweißverbindung auf.

Um Werkstücke zu messen, geht nach der EP 2 322 897 A1 von einem Roboterarm ein Messwertaufnehmer aus. Dieser wird zunächst mit einer ersten Geschwindigkeit in eine Startposition verbracht, um sodann mit einer zweiten Geschwindigkeit an einen Messpunkt angenähert zu werden.

Eine zerstörungsfreie Überprüfung von Schweißpunkten wird in der US 2017/0284970 A1 beschrieben. Dabei wird ein Phased-Array-Ultraschallprüfkopf eingesetzt.

Der DE 10 2005 043 776 A1 ist ein gattungsgemäßes Verfahren zur Positionierung eines Ultraschallprüfkopfes zu entnehmen, der kamerabasiert von einer Schätzposition in eine Idealprüfposition verbracht wird.

Der JP H02263157 A ist eine Ultraschallprüfordnung mit einem Ultraschallprüfkopf zu entnehmen, der verschwenkbar von einer Halterung ausgeht. Mit der Halterung ist eine Sprüheinrichtung verbunden, mittels der die Frontfläche des Ultraschallprüfkopfes benetzt werden kann.

Gegenstand der DE 31 22 408 A1 sind ein Verfahren und eine Vorrichtung zur Reinigung und Benetzung der Frontfläche eines Ultraschall-Objektivs.

Der vorliegenden Erfindung liegt die Aufgabe zugrunde, ein Verfahren der eingangs genannten Art so weiterzubilden, dass schnell und präzise eine Schweißung überprüft werden kann und die Ergebnisse gegebenenfalls für weitere Schweißungen bzw. Schweißverbindungen Verwendung finden.

Verfahrensmäßig wird die Aufgabe im Wesentlichen dadurch gelöst, dass CAD-Daten der Soll-Position der Schweißung zur Verfügung gestellt werden, dass unter Zugrundelegung der CAD-Daten der Schweißung der Ultraschallprüfkopf auf die Soll-Position der Schweißung ausgerichtet wird und dass nach der Ermittlung der Ist-Position der Schweißung mittels des optischen Sensors der Ultraschallprüfkopf kraftgeregelt auf die Schweißung aufgesetzt wird, wobei dem Roboter ortsfest ein oder mehrere Kalibrierkörper bekannter CAD-Daten zugeordnet werden, der bzw. die Kalibrierkörper zusammen mit dem Prüfling bzw. des einen Teils oder der mehreren Teile des Prüflings mittels einer Kamera oder eines 3D-Scanners gemessen werden, und dass mittels 2D-Bilder der Kamera oder 3D-Punktwolke des 3D-Scanners Lage des Prüflings ermittelt und unter Berücksichtigung von CAD-Daten des Prüflings in das Koordinatensystem des Roboters transformiert werden und dass zum Aufsetzen des Ultraschallprüfkopfes in Normalenrichtung der Schweißung die Normalenrichtung mittels Ultraschallsensoren des Ultraschallprüfkopfes und/oder durch Ermittlung der Richtung des Vektors der auf die Schweißung einwirkenden Kraft mittels zumindest eines Kraft- und/oder Momentensensors ermittelt wird.

Erfindungsgemäß wird insbesondere ein Mehrachsroboter benutzt, an dem ein Ultraschallprüfkopf befestigt ist. Hierbei handelt es sich insbesondere um ein Phased-Array-Ultraschallprüfkopf, der zum Beispiel eine Matrix von 10 x 10 bis 15 x 15 Sender/Empfänger-Elementen aufweisen kann. Die Arbeitsfrequenz kann 20 MHz betragen. Ferner ist in ortsfester Beziehung zu dem Ultraschallprüfkopf ein Sensor, insbesondere optischer Sensor, angeordnet, mittels dessen die Schweißung bzw. der Schweißpunkt erfasst wird. Zur Überprüfung wird zunächst aufgrund der Soll-Daten der Schweißung, und zwar unter Zugrundelegung von CAD-Dateien, der Ultraschallprüfkopf auf die entsprechenden Positionen ausgerichtet, um sodann mittels des optischen Sensors die tatsächliche Schweißposition zu ermitteln und anschließend den Prüfkopf auf die Schweißung auszurichten, um diesen zu überprüfen. Dabei wird der Prüfkopf adaptiv kraftgeregelt auf die Schweißung aufgesetzt. Hierzu wird die Kraft-Momenten-Sensorik des Roboters verwendet, um beim Messen der Schweißung den Ultraschallprüfkopf auf die Schweißung mit einer Kraft P von z.B. P ≤ 30 N, insbesondere 5 N ≤ P ≤ 15 N, bevorzugt P in etwa 5 N - 10 N, einwirken zu lassen.

Die Prüfung selbst erfolgt dadurch, dass zwischen Sender und Empfänger des Ultraschallprüfsensors ein Koppelmedium vorliegt, vorzugsweise Wasser, das sich in einem eingekapselten Bereich des Prüfkopfs befindet. Dieser Bereich bzw. ein das Koppelmedium enthaltende Gehäuse ist prüflingsseitig mit einer Abdeckung wie z.B. einer Membran wie Folie verschlossen, die zum Messen zuvor mit einer Kopplungsflüssigkeit, wie Wasser oder Öl, benetzt wird.

Ein Einmessen der Bewegung des Roboters in das Koordinatensystem des Prüflings erfolgt unter Berücksichtigung der CAD-Daten des Prüflings. Dies bedeutet, dass die Lage des Prüflings zu dem Roboter und somit zu dem Ultraschallprüfkopf unter Einbeziehung der CAD-Daten des Prüflings bestimmt wird.

Das Einmessen kann mittels einer oder mehrerer 2D-Bilder einer Kamera oder 3D-Punktewolke bzw. -wolken eines 3D-Scanners erfolgen. Dabei wird ein Best-Fit zwischen den 2D-Bildern bzw. der 3D-Punktwolke und dem CAD-Modell durchgeführt, um die 6D-Lage des Prüflings zu erfassen.

Daher sieht die Erfindung vor, dass dem Roboter ortsfest ein oder mehrere Kalibrierkörper bekannter CAD-Daten zugeordnet werden, dass der bzw. die Kalibrierkörper zusammen mit dem Prüfling bzw. des einen Teils oder der mehreren Teile des Prüflings mittels einer Kamera oder eines 3D-Scanners gemessen werden, und dass mittels 2D-Bilder der Kamera oder 3D-Punktwolke des 3D-Scanners die Lage des Prüflings unter Einbeziehung von CAD-Daten des Prüflings in das Koordinatensystem des Roboters transformiert werden.

Die Ausrichtung des Ultraschallprüfkopfs auf die Soll-Position der Schweißung erfolgt auf der Basis von CAD-Daten der Schweißung, da die Roboterbewegung quasi in die CAD-Daten des Prüflings eingemessen worden ist, wenngleich sich der Roboter in seinem Weltkoordinatensystem bewegt.

Bei Ausrichten des Ultraschallprüfkopfes auf die Schweißung handelt es sich um eine Groborientierung, d.h., dass die CAD-Daten als Startposition für die Messung berücksichtigt werden. Gleichzeitig ist der optische Sensor, insbesondere in Form einer Kamera, im definierten Abstand zur Oberfläche des Prüflings positioniert.

Anschließend wird eine Feinkorrektur auf die tatsächliche Schweißpunktlage mittels des optischen Sensors und einer Bildverarbeitung durchgeführt.

Es wird die Schweißung, insbesondere in Form eines Schweißpunktes, aufgenommen. Mittels der Bildverarbeitung wird die 2D-Lage der Schweißung ermittelt. Erforderliche Korrekturen werden an die Robotersteuerung übermittelt, um den Messkopf zentral über der Schweißung auszurichten.

Bei der Messung selbst soll der Ultraschallprüfkopf entlang der Normalen der Schweißung ausgerichtet sein, und zwar mittig auf die Schweißung bzw. auf den Schweißpunkt.

Die Normalenrichtung ergibt sich näherungsweise aus den CAD-Daten der Soll-Position der Schweißung. Toleranzen zwischen dem echten Bauteil und dem CAD-Modell werden mittels Kommunikation mit dem Ultraschallprüfkopf korrigiert. Hierzu ist vorgesehen, dass auf der Basis der Laufzeitmessungen von einigen Sender/Empfängern des Arrays des Ultraschallprüfkopfs der zu messende Bereich lagemäßig erfasst und sodann die entsprechenden Informationen an die Robotersteuerung übergeben werden, um den Prüfkopf in Normalenrichtung des Schweißpunktes auszurichten. Mit anderen Worten bewertet der Prüfkopf selbst die Raumlage des Schweißpunktes, um sodann entsprechend den Prüfkopf in Normalenrichtung auszurichten. Somit erfolgt eine Kommunikation zwischen Messroboter und Ultraschallprüfgerät.

Ergänzend oder alternativ kann die Normalenrichtung auch mittels des Kraft- und/oder Momenten-Sensors bestimmt werden, da dieser die X-, Y- und Z-Komponente des Kraftvektors ermittelt. Die Ausrichtung durch Ermittlung des Kraftvektors erfolgt insbesondere dann, wenn mittels der Ultraschallsensoren z.B. aufgrund zu starker Neigung des Ultraschallprüfkopfes eine korrekte Bestimmung nicht mehr erfolgen kann.

Zwischen den einzelnen Schweißungen sollte der Ultraschallprüfsensor mit höherer Geschwindigkeit als beim Anfahren an eine Schweißung bewegt werden.

Insbesondere sieht die Erfindung vor, dass eine Vorsortierung der zu überprüfenden Schweißungen bzw. Schweißpunkte erfolgt, um unnötige Fahrwege des Roboters zu vermeiden. So werden benachbarte Schweißpunkte nacheinander angefahren.

Mit anderen Worten ist vorgesehen, dass bei einer Überprüfung mehrerer Schweißpunkte zur Überprüfung dieser eine Vorsortierung dahingehend erfolgt, dass nach Überprüfung eines Schweißpunktes sodann nächstliegender zu dem zuvor überprüften Schweißpunkt überprüft wird.

In Weiterbildung der Erfindung besteht die Möglichkeit, dass die Schweißpunkte in Gruppen aufgeteilt werden, wobei die Schweißpunkte einer Gruppe zunächst und sodann die Schweißpunkte anderer Gruppen nacheinander überprüft werden.

Dabei sollte eine Gruppeneinteilung dahingehend erfolgen, dass der Abstand der Schweißpunkte in jeweiliger Gruppe geringer als Abstand zwischen den Gruppen ist.

Unabhängig ist insbesondere vorgesehen, dass Schweißpunkte in Bezug auf Schweißfehler, wie Dornen, ermittelt werden und ein Messen von einer einen Schweißfehler aufweisenden Schweißung unterbleibt.

Hervorzuheben ist insbesondere, dass die erfassten Abweichungen zwischen Soll- und Ist-Positionen einer oder mehrerer Schweißungen bei den folgenden weiteren Schweißungen an demselben oder demgleichen Prüfling berücksichtigt werden, so dass eine Selbstregelung dahingehend erfolgt, dass Messungen an Schweißungen mit hoher Präzision ortsgenau durchgeführt werden können.

Bei der Ultraschallprüfung muss der Ultraschallprüfkopf, der zumindest einen Ultraschallsensor und eine Ultraschallvorlaufstrecke wie Wasservorlaufstrecke umfasst, die von einem vorzugsweise rohrförmigen Gehäuse umgeben bzw. von diesem aufgenommen ist, mit dem zu prüfenden Gegenstand kontaktiert sein. Hierzu ist es erforderlich, dass sich zwischen dem Prüfkopf und dem Gegenstand ein Koppelmedium, wie Wasser oder Öl, befindet. Daher muss sichergestellt werden, dass im hinreichenden Umfang ein Koppelmedium zur Verfügung gestellt werden kann.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von bevorzugten Ausführungsbeispielen. Dabei werden die sich auf den Ultraschallprüfkopf an sich beziehenden Merkmale von den Patentansprüchen nicht erfasst.

Es zeigen:
- Fig. 1: einen Ausschnitt eines Roboterarms mit Ultraschallprüfkopf,
- Fig. 2: einen Ausschnitt eines Prüflings,
- Fig. 3: eine Anordnung zum Messen und Überprüfen von Schweißungen,
- Fig. 4: eine erste Darstellung einer Ultraschallprüfkopfanordnung,
- Fig. 5: die Ultraschallkopfanordnung gemäß Fig. 4 in anderer Stellung,
- Fig. 6a-c: verschiedene Schwenkstellungen eines Ultraschallprüfkopfes und
- Fig. 7: eine Detaildarstellung eines Ultraschallprüfkopfes ohne Kamera.

Mit Ultraschall können Schweißungen an einem Prüfling, wie Kraftfahrzeug, oder Teilen eines solchen überprüft werden.

Bei den Schweißungen handelt es sich zum Beispiel um Punktschweißungen, die insbesondere durch Widerstandsschweißen erzeugt sind, bei dem es sich um eine verbreitete Technik zur festen Verbindung von zwei oder mehr Metallteilen, meist Blechen oder Platten aus Stahl oder Aluminium, handelt. Hervorzuheben ist insbesondere die Produktion von Automobilkarosserien, wobei das Widerstandsschweißen ein wichtiges Fügeverfahren ist. Hierauf ist jedoch die erfindungsgemäße Überprüfung von Schweißungen bzw. Schweißpunkten nicht beschränkt. Andere Bereiche der Blechbearbeitung bzw. des Fügens von Blechen, zum Beispiel bei Haushaltsgeräten, kommen gleichfalls in Frage. Die Verbindung der Metallteile erfolgt dabei über mehrere kleinere kreisförmige Verschweißungen, also Schweißpunkte. Um die Güte der Verbindungen sicherzustellen, müssen entsprechende Schweißpunkte überprüft werden. Da jedoch nicht sichergestellt ist, dass die Schweißungen stets an den vorgegebenen Positionen, den Soll-Positionen, durchgeführt werden, kann eine Überprüfung an den Soll-Positionen keine sicheren Aussagen über die Güte der Schweißungen vermitteln. Vielmehr muss an der tatsächlichen Schweißposition (Ist-Position) eine Überprüfung erfolgen. Dies kann zerstörungsfrei mit einem Ultraschallprüfsensor durchgeführt werden, wobei das Ultraschall-Puls-EchoVerfahren, also das Reflexionsschallverfahren zur Anwendung gelangen kann. Dabei ist es erforderlich, dass zwischen dem Sender-Empfänger ein Kopplungsmedium vorhanden ist, das üblicherweise Wasser ist. Nachstehend sind diese prinzipiell erläutert.

Um die Güte der Schweißung zu ermitteln, ist es somit erforderlich, die Ist-Position der Schweißung zu erfassen, um sodann eine Prüfung vorzunehmen. Nachstehend wird dies prinzipiell erläutert.

Erfindungsgemäß erfolgt eine Überprüfung der Schweißung unter Einsatz eines Roboters. Dabei kann am Flansch 10 eines Arms 12 eines Mehrachsroboters ein Prüfkopf 14 befestigt sein, der einen Ultraschallprüfkopf 16 mit Wasservorlaufstrecke aufweist, der im Ausführungsbeispiel über einen Adapter 18 mit einem Kraft-Momentensensor 20 verbunden ist, der seinerseits über nicht näher bezeichnete Befestigungselemente mit dem Flansch 10 verbunden ist. In ortsfester Beziehung zu dem Ultraschallprüfkopf 16 ist ein optischer Sensor in Form einer Kamera 22 vorhanden, die z.B. von einer Halterung ausgeht, die zwischen dem Adapter 18 und dem Kraftsensor 20 angeordnet ist.

Der Prüfkopf 16 selbst ist vorzugsweise als Phased-Array-Ultraschallprüfkopf ausgebildet und weist eine Matrix von Sender/Empfängern auf, zum Beispiel eine Matrix von 10 x 10 bis 15 x 15 Sender/Empfängern ist hervorzuheben. Die Ankopplung des Prüfkopfs 16 an das Prüfobjekt erfolgt durch eine Wasservorlaufstrecke, vorzugsweise in bewährter Bubblertechnik.

Mittels des optischen Sensors 22, insbesondere in Form der Kamera, kann die Ist-Position einer Schweißung ermittelt werden, um sodann den Ultraschallmesskopf 16 auf die Ist-Position auszurichten und auf die Schweißung aufzusetzen. Dabei wird eine die Wasservorlaufstrecke im Ultraschallprüfkopf 16 prüflingsseitig verschließende Membran 24 auf den Prüfling mit einer Kraft aufgesetzt, die im Bereich von vorzugsweise 5 - 10 N liegt. Es erfolgt ein adaptives, kraftgeregeltes Aufsetzen unter Zuhilfenahme der Kraft-Momenten-Sensorik des Roboters. Des Weiteren erfolgt eine Ausrichtung des Prüfkopfs 16 auf die Schweißung derart, dass eine Krafteinwirkung des Prüfkopfs auf die Schweißung in deren Normalenrichtung erfolgt.

Die Normalenrichtung wird dabei insbesondere durch Kommunikation zwischen dem Ultraschallprüfkopf 16 und der Robotersteuerung durchgeführt. Mittels Laufzeitmessungen von zumindest einigen, vorzugsweise 4, Sensoren des Phased-Array-Ultraschallprüfkopfs wird Lage des Bereichs ermittelt, der zu messen ist. Nach erfolgter Lagebestimmung kann somit die Normale ermittelt und entsprechend über die Robotersteuerung der Prüfkopf ausgerichtet werden, damit dessen Längsachse entlang der Normalenrichtung des Schweißpunktes verläuft. Insbesondere wird die Längsachse des Prüfkopfes 14 auf die vom Mittenbereich des Schweißpunktes ausgehende Normale ausgerichtet.

Der Ultraschallprüfkopf 16 ist mit dem Adapter 18 verschraubt (Verschraubung 17). Ferner kann messkopfseitig eine Silikonschicht 19 als Kollisionsschutz vorgesehen sein. Dieser bewirkt insbesondere, dass ein nicht zu hartes Anfahren an ein Hindernis erfolgt, so dass ein Abbremsen bzw. Ausweichen erfolgen kann, ohne dass der Ultraschallprüfkopf 16 beschädigt wird.

Im Falle einer möglichen Kollision des Ultraschallprüfkopfs 16 mit dem Prüfling, wie Blechwände, beim Anfahren eines Schweißpunktes kann eine minimale Ausweichbewegung eingeführt werden, so dass der Prüfkopf 16 weiterhin möglichst zentrisch auf dem Schweißpunkt aufsitzt.

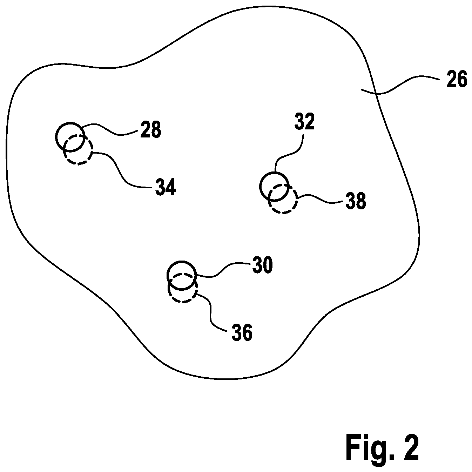

Anhand der Fig. 2 soll das Messverfahren prinzipiell verdeutlicht werden. Der Fig. 2 ist ein Ausschnitt 26 eines Prüflings zu entnehmen, der z.B. punktuell mit einem nicht dargestellten Gegenstand verschweißt ist. Die entsprechenden Schweißpunkte liegen als CAD-Daten vor und sind in der Fig. 2 durch ausgezogene Kreise 28, 30, 32 symbolisiert.

In der Praxis stimmt die Position der tatsächlichen Schweißpunkte 34, 36, 38 nicht immer mit den Soll-Schweißpunkten 28, 30, 32 überein, wie durch die gestrichelten Kreise 34, 36, 38 verdeutlicht sein soll. Um jedoch die Güte der Schweißpunkte 34, 36, 38 positionsgenau zerstörungsfrei zu messen, ist es erforderlich, dass der Ultraschallsensor 16 auf die Ist-Schweißpunkte ausgerichtet ist, um sodann auf diese mit der notwendigen Kraft aufgesetzt zu werden, um eine ordnungsgemäße Messung durchzuführen. Dabei wird mittels der Kamera und Bildverarbeitung Lage des tatsächlichen Schweißpunkts 34, 36, 38 und mittels Laufzeitmessungen dessen Normalenrichtung bestimmt. Alternativ oder ergänzend kann auch der Kraftvektor mittels der Kraft-Momentensensorik ermittelt und durch Verstellen des Prüfkopfs dessen Ausrichtung entlang der Normalen erfolgen.

Erfindungsgemäß ist vorgesehen, dass nach Einmessen des Roboters auf das Koordinatensystem des Prüflings der Ultraschallsensor 16 zunächst auf die Soll-Schweißpunkte 28 bzw. 30 bzw. 32 ausgerichtet wird, die sich z.B. aus CAD-Daten ergeben. Nach Ausrichten auf den Soll-Schweißpunkt wird mittels der Kamera 22 der tatsächliche Schweißpunkt optisch erfasst und dessen Koordinaten bestimmt. Hierzu kann ein Bildverarbeitungsalgorithmus den 2D-Mittelpunkt des tatsächlichen Schweißpunktes ermitteln und an den Messroboter übergeben. Sofern eine Abweichung zwischen Soll- und Ist-Wert besteht, wird entsprechend der Roboterarm 12 verstellt, damit der Ultraschallsensor 16 auf den tatsächlichen Schweißpunkt 34 bzw. 36 bzw. 38 ausgerichtet ist und diesen messen kann.

Die entsprechenden Abweichungen können auch dazu benutzt werden, um bei weiteren Schweißungen an demselben oder einem entsprechenden Prüfling Korrekturen vorzunehmen, um eine bessere Anpassung von Soll- und Ist-Schweißpunkten zu erzielen. Es erfolgt insoweit eine Korrektur der Position, an der geschweißt werden soll.

Alternativ oder ergänzend können Messergebnisse, ermittelte Differenzen zwischen Ist- und Soll-Positionen der Schweißungen bzw. der Schweißpunkte in einer Kundendatenbank und/oder in einem CAD-Modell abgelegt werden, das die Soll-Positionen der Schweißungen enthält.

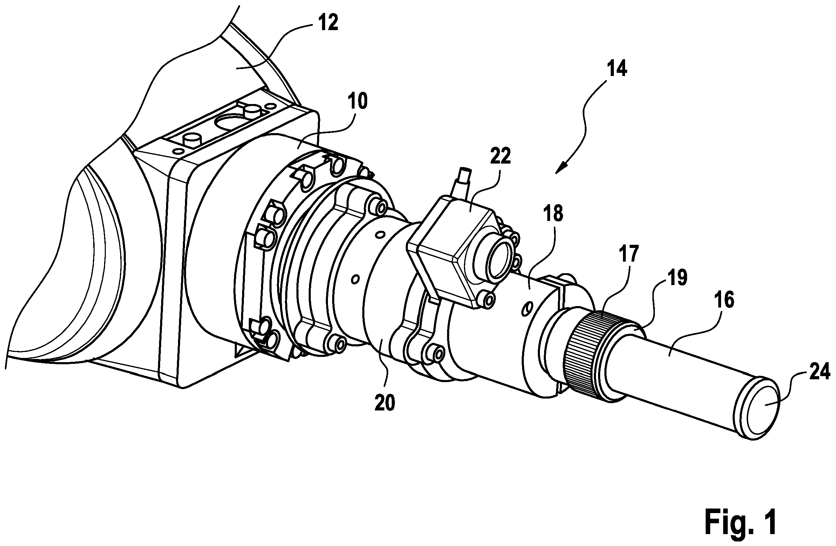

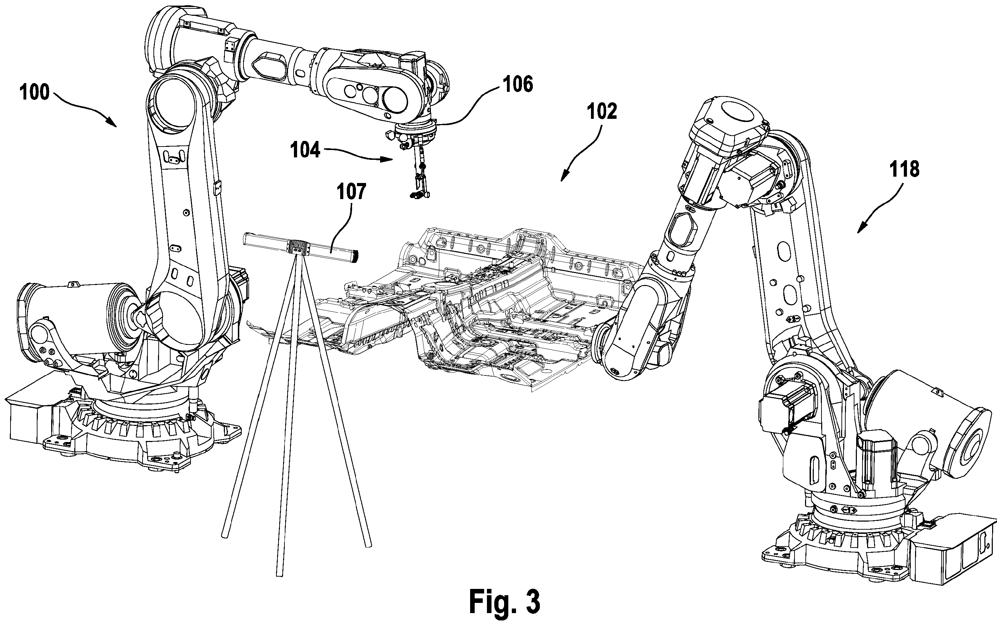

Ist anhand der Fig. 1 rein prinzipiell eine Ultraschallprüfkopfanordnung erläutert worden, um Schweißungen in Form von Schweißpunkten zu überprüfen, so sind den Fig. 3 bis 7 eine bevorzugte Ausführungsform einer Ultraschallprüfkopfanordnung 104 sowie weitere die Erfindung prägende Merkmale für sich und/oder in Kombination zu entnehmen, wobei die Ultraschallprüfkopfanordnung an sich nicht von den Ansprüchen erfasst ist.

Anhand der Fig. 3 wird prinzipiell das Einmessen eines Roboters 100 erläutert, um Schweißungen an einem Prüfling 102 zu überprüfen, von dem CAD-Daten zur Verfügung stehen. Ohne die Erfindung einzuschränken, werden die Schweißungen nachstehend grundsätzlich als Schweißpunkte bezeichnet.

Um die räumliche Lage des Prüflings 102 in Bezug auf den Roboter 100 und damit eine Ultraschallprüfkopfanordnung 104, die an einem Endflansch 106 des Roboters befestigt ist, zu ermitteln, also den Roboter 100 einzumessen, werden mittels eines 3D-Scanners 107 sowohl der Prüfling 102 als auch Kalibrierkörper 108, 110, 112 erfasst, um aus der 3D-Punktwolke bzw. -wolken des 3D-Scanners 107 die Raumkoordinaten des Prüflings 102 in das Koordinatensystem des Roboters 100 transformieren zu können, wobei gleichzeitig die CAD-Daten des Prüflings 102 und der Kalibrierkörper 108, 110, 112 einbezogen werden. Die CAD-Daten der Kalibrierkörper 108, 110, 112 sind bekannt. Auch die Raumkoordinaten im Roboterkoordinatensystem stehen zur Verfügung.

Die Kalibrierkörper 108, 110, 112 gehen von einer Halterung 113 aus, die Teil der Ultraschallprüfkopfanordnung 104 ist, die mit dem Flansch 106 des Roboters 100 verbunden ist. Somit kann die Prüfkopfanordnung 104 auf der Basis der CAD-Daten des Prüflings 102 zu diesem bewegt werden.

Die Halterung mit den Kalibrierkörpern kann nach erfolgtem Einmessen entfernt werden, so dass die beim Messen bzw. Überprüfen der Schweißpunkte mittels des Roboters zu bewegende Masse reduziert wird.

Damit der Arbeitsbereich des Roboters 100 sämtliche zu prüfende Bereiche des Prüflings 102 erreichen kann, wird der Prüfling 102 bevorzugterweise von einem zweiten Roboter 118 gehalten und fixiert und kann somit derart zu dem ersten Roboter 100 ausgerichtet werden, dass die Messungen durchführbar sind.

Des Weiteren ist vorgesehen, dass nach der Best-Fit-Methode die Daten der 3D-Punktwolke und die CAD-Daten eingepasst werden.

Es wird die so gewonnene 3D-Punktwolke mit den CAD-Daten abgeglichen und die Bauteillage festgestellt.

Es werden folglich die im bauteillageunabhängigen Format vorliegenden CAD-Daten in absolute Roboterpositionen umgewandelt, wobei der 3D-Scanner eingesetzt wird.

Durch diese Maßnahmen stehen die Koordinaten des Prüflings und dessen räumliche Lage zu dem Roboter 100 zur Verfügung. Die 6D-Daten im Bauteilkoordinatensystem werden in das Weltkoordinatensystem des Roboters exportiert und stehen dort zur Verfügung.

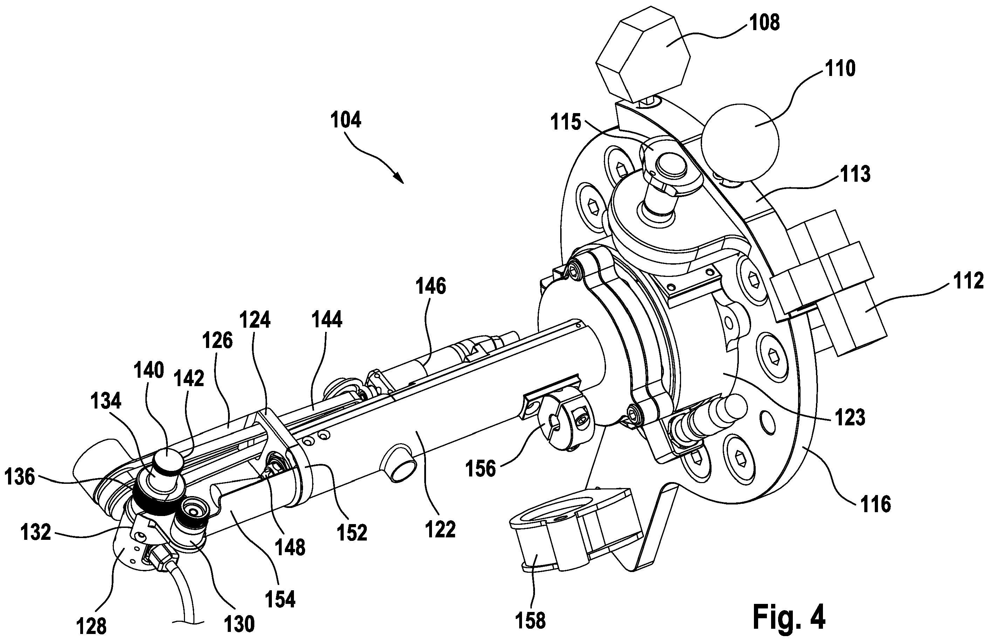

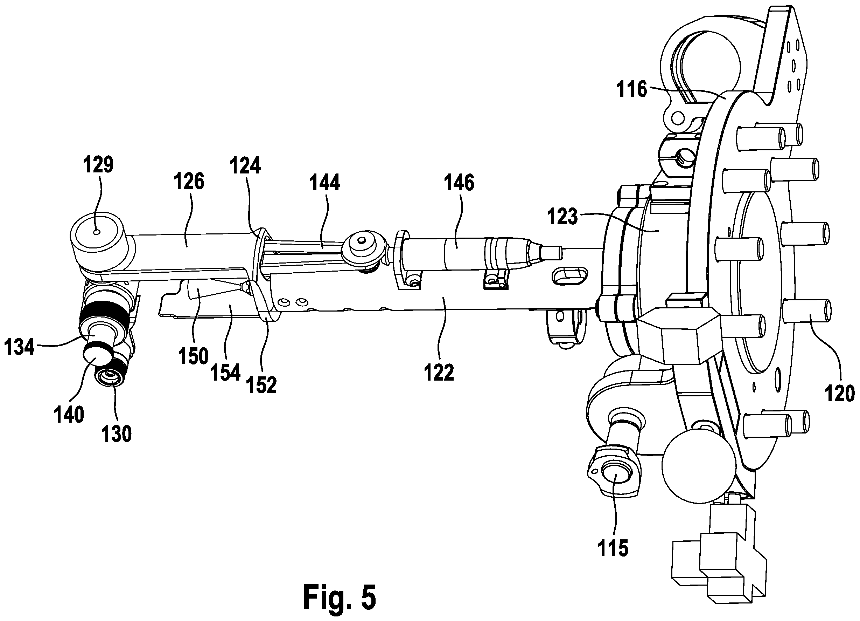

Die Prüfkopfanordnung 104 ist detaillierter in den Fig. 4 und 5 dargestellt.

Von einer Basis- oder Flanschplatte 116, die in eindeutiger räumlicher Zuordnung mit dem Roboter 100 über Zentrierstifte 120 verbindbar ist, geht zum einen die Halterung 113 für die Kalibrierkörper 108, 110, 112 und zum anderen ein Träger 122 aus, der über einen Kraft-Momentensensor 123 mit der Platte 116 verbunden ist.

Der Träger 122 weist in seinem distalen Bereich eine Halterung 124 auf, die im Ausführungsbeispiel eine L-Geometrie mit einem in Längsachsenrichtung des Trägers 122 verlaufenden Schenkel 126 besitzt, der drehbar einen Ultraschallprüfkopf 128 mit Kamera 130 aufnimmt. Dabei ist die Kamera 130 mit dem Gehäuse 132 des Ultraschallprüfkopfs 128 starr verbunden, so dass eine synchrone Bewegung von Ultraschallprüfkopf 128 und Kamera 130 erfolgt, die strahleintrittsseitig von einer Ringbeleuchtung umgeben sein kann.

Die Kalibrierkörper 108, 110, 112 mit der Halterung 113 ist ortsfest mit dem Flansch 116 verbindbar, und zwar über einen Rastbolzen 115, wie die zeichnerische Darstellung selbsterklärend verdeutlicht.

Bei dem Ultraschallprüfkopf 128 kann es sich um einen Phased-Array-Prüfkopf handeln.

In gewohnter Weise weist der Prüfkopf 128 eine Wasservorlaufstrecke auf, die von einem Gehäuse 134 umgeben ist. Um unterschiedlich lange Vorlaufstrecken nutzen zu können, ist das Gehäuse 134 lösbar mit dem Gehäuse 132 des Ultraschallprüfkopfs 128 z.B. über eine Rändelmutter 136 verbunden. Distal weist das Gehäuse 134 der Vorlaufstrecke eine Abdeckung, wie Membran 140, auf, die beim Messen eines Schweißpunktes auf diesen aufgesetzt wird. Die Membran 140 kann ihrerseits gleichfalls ausgetauscht werden, z.B. mittels der Rändelmutter 142.

Um den Ultraschallprüfkopf 128 und somit die Kamera 130 verschwenken zu können, ist ein Transmissionsantrieb vorgesehen. Ein Riemen 144 wird dabei über einen Aktor 146 verstellt.

Der Riemen 144 wird durch eine nicht näher bezeichnete Umlenkrolle geführt, deren Achse die Schwenkachse 129 des Ultraschallprüfkopfs 128 vorgibt.

In dem Träger 122 ist des Weiteren eine Dosiereinrichtung integriert, die eine Austrittsdüse 148 aufweist, über die eine Benetzungsflüssigkeit abgebbar ist, um die Membran 140 benetzen zu können. Das Benetzungsmedium, wie Wasser oder Öl, wird kegelförmig von der Düse 148 versprüht, wobei Längsachse des Kegels 150 mit Längsachse des Trägers 122 zusammenfällt oder parallel zu dieser verläuft. Senkrecht hierzu verläuft die Schwenk- bzw. Drehachse 129 des Ultraschallprüfkopfs 128, wie sich aus den zeichnerischen Darstellungen ergibt.

Des Weiteren geht von dem mit dem Träger 122 verbundenen Querschenkel 152 der Halterung 20 ein Abschirmblech 154 aus, das derart dimensioniert ist, dass dann, wenn der Ultraschallprüfkopf 128 und damit die Membran 140 auf den Sprühkegel 150 der Dosiereinrichtung mit der Düse 148 ausgerichtet ist, die Kamera 130, d.h. deren Eintrittsoptik abgeschirmt ist, so dass ein Besprühen dieser nicht erfolgen kann.

Die zu dem Ultraschallprüfkopf 128, der Kamera 130 und dem Aktor 146 führenden Verbindungen werden von Kabelführungen 156, 158 aufgenommen, die gleichzeitig eine Zugentlastung bilden.

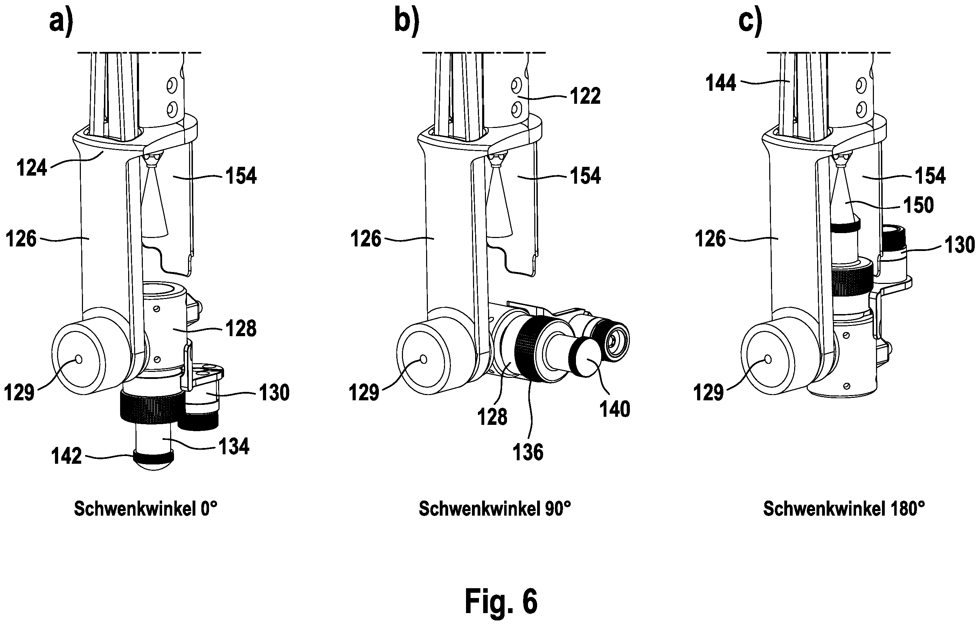

Anhand der Fig. 6 soll noch einmal verdeutlicht werden, dass der Ultraschallprüfkopf 128 und synchron mit diesem die Kamera 130 zu der Halterung 124 und damit der Basisplatte 116 verschwenkt werden können. Dabei sind in der Darstellung a) der Schwenkwinkel 0°, in der Darstellung b) der Schwenkwinkel 90° und in der Darstellung c) der Schwenkwinkel 180° dargestellt, in der die Membran 140 auf den Sprühkegel 150 zu deren Benetzung ausgerichtet ist.

Man erkennt gleichzeitig das Trennblech 154, das zwischen der Kamera 130 und dem Sprühkegel 150 verläuft, so dass ein Benetzen der Optik der Kamera 130 ausgeschlossen ist.

Zwischen den in der Fig. 6 wiedergegebenen Stellungen des Ultraschallprüfkopfs 128 können beliebige Stellungen eingenommen werden, wodurch ein optimales Ausrichten des Ultraschallprüfkopfs 128 auf einen Schweißpunkt ermöglicht wird und somit Kollisionen mit dem Prüfling 102 vermieden werden können. Zusätzlich kann der Roboterarm 100 bei festem Schwenkwinkel um die Achse des Ultraschallprüfkopfs 128 drehen, um Kollisionen zu vermeiden. Insgesamt ergeben sich somit zwei Winkelfreiheitsgrade für das kollisionsfreie Aufsetzen des Ultraschallprüfkopfs auf einen Schweißpunkt, nämlich der Schwenkwinkel und der Rotationswinkel um die Achse des Ultraschallprüfkopfs.

Um mit der Anordnung einen Schweißpunkt zu überprüfen, erfolgt zunächst eine Grobeinstellung des Prüfkopfs 128 auf der Basis der CAD-Daten der Schweißpunkte, die in zuvor beschriebener Weise in die Koordinaten des Roboters 100 transformiert worden sind.

Aus dieser Soll-Position wird der Prüfkopf 128 aufgrund des von der Kamera 130 aufgenommenen Bildes und der Bildverarbeitung mittels der diese Daten verarbeitenden Software verstellt, d.h. das die Prüfkopfanordnung 104 haltende Glied des Roboters 100 bzw. dessen Arme, um sodann nach Ermittlung der vom Mittelpunkt des Schweißpunktes ausgehenden Normalen den Ultraschallprüfkopf 128 in Normalenrichtung auf den Schweißpunkt als der Ist-Position aufzusetzen.

Insbesondere wird mittels vier Sensoren die Normalenrichtung ermittelt. Sollte dies nicht möglich sein, wird der Kraft-Momentensensor 123 benutzt. Unabhängig hiervon können sowohl die Ultraschallsensoren als auch der Kraft-Momentensensor 123 zur Ermittlung der Normalen berücksichtigt werden, so dass eine Redundanz gegeben ist.

Des Weiteren ist mittels des Kraft-Momentensensors 123 sichergestellt, dass etwaige Kollisionen unmittelbar erfasst und somit ein Bewegen des Prüfkopfs 128 vom Kollisionsbereich weg unmittelbar erfolgen kann.

Durch die Kommunikation zwischen Ultraschallprüfkopf 128 und dem Prüfling 102 bzw. dem Schweißpunkt ist gewährleistet, dass beim Messen bzw. Überprüfen eine Ausrichtung entlang der Normalen sichergestellt ist.

Vor dem Messen kann ein Besprühen der Membran 140 mittels der Dosiereinrichtung erfolgen.

Um ein optimales Ausrichten bei gleichzeitiger Vermeidung einer Kollision mit Bereichen des Prüflings auszuschließen, kann erfindungsgemäß der Prüfkopf 128 verschwenkt werden.

Der Soll-Ist-Versatz des Schweißpunktes kann abgespeichert werden.

Da die Membran 140 benetzt ist, bedarf es eines Benetzens des Prüflings nicht.

Bevorzugterweise wird vor jeder Messung die Membran 140 benetzt.

Da grundsätzlich mehrere Schweißpunkte zu überprüfen sind, erfolgt eine Vorsortierung, um unnötige Fahrwege zu vermeiden. So werden benachbarte Schweißpunkte nacheinander angefahren. Auch besteht die Möglichkeit, eine Vorsortierung dahingehend vorzunehmen, dass Schweißpunkte in Gruppen unterteilt werden, wobei die Gruppen nacheinander angefahren werden, um in diesen die Schweißpunkte zu überprüfen.

Aufgrund der Kamerabildverarbeitung ergeben sich weitere Vorteile, wie nachstehend erläutert wird.

Es werden nicht nur Schweißpunkte erkannt, sondern auch schädliche Merkmale werden ermittelt.

So kann in einem ersten Schritt festgestellt werden, ob überhaupt ein Schweißpunkt oder nur reines Prüflingsmaterial erfasst ist.

Wird festgestellt, dass ein Schweißpunkt in der Realität nicht vorhanden ist, ein solcher jedoch im CAD-Modell hinterlegt worden ist, wird eine Fehlermeldung generiert, um so den Datenbestand zu aktualisieren. Alternativ kann mittels eines Roboters ein Schweißpunkt realisiert werden.

Es können die 2D-Lagen mehrerer Schweißpunkte im Bild detektiert werden, um den Schweißpunkt, welcher am nächsten zur Bildmitte sitzt, zu ermitteln.

Für die Detektion der Schweißpunkte wird wie folgt vorgegangen:
Mehrere Muster von real existierenden Schweißpunkten können als Anlernbilder mit dazugehörigen Suchkreisen für die Mustererzeugung in der Software hinterlegt sein. Diese Suchmuster werden gleichzeitig in der Mustersuche angewendet. Die Zahl der zu suchenden Schweißpunkte kann frei eingestellt werden.

Dabei ist es wichtig, dass mehr als nur ein Schweißpunkt im Bild gesucht wird, da in der Praxis mehrere Schweißpunkte dicht nebeneinander liegend auftreten können.

Wird ein Schweißpunkt detektiert, so wird dieser dahingehend untersucht, ob ein Dorn vorhanden ist. Sollte dies der Fall sein, wird der Schweißpunkt nicht angefahren, da ansonsten die Membran des Ultraschallprüfkopfes beschädigt werden kann. Eine Fehlermeldung kann ausgegeben werden.

Wird ein akzeptabler Schweißpunkt festgestellt, kann eine abschließende Sicherheitsüberprüfung erfolgen, ob der Korrekturvorschlag, also Positionsveränderung zur Ausrichtung auf den Ist-Schweißpunkt basierend auf der Bildverarbeitung kleiner als eine einstellbare Grenze ist, um ungewollte Kollisionen bei unplausiblen Korrekturwerten zu vermeiden.

Abschließend fährt der Roboter in einer einzigen Fahrt im sicheren Abstand zur Oberfläche den Schweißpunkt an, damit der Ultraschallprüfkopf mittig und im definierten Abstand zum Schweißpunkt ausgerichtet ist. Sodann erfolgt ein Aufsetzen der Membran auf den Schweißpunkt und ein Messen.

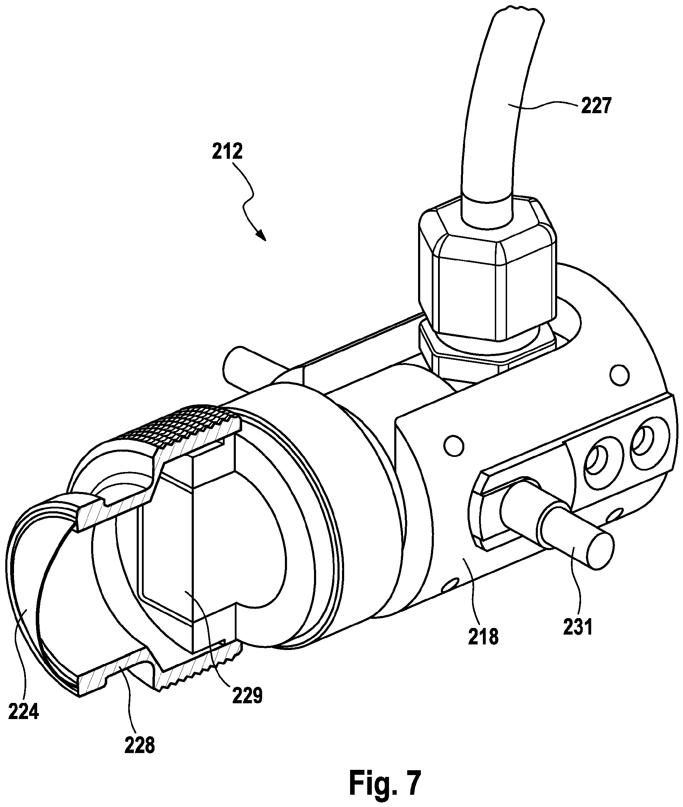

In Fig. 7 ist rein prinzipiell ein Ultraschallprüfkopf 212 dargestellt, der ein eine Vorlaufstrecke umfassendes Gehäuse 228, eine Membran 224 sowie in einem Gehäuse 218 vorhandene bzw. mit dem Gehäuse 218 verbundene Ultraschallsensoren 229 aufweist, die über einen Anschluss (Kabel 227) mit einer Elektronik verbunden sind, um Ultraschallimpulse zu emittieren und reflektierte Ultraschallimpulse zu empfangen und sodann auswerten zu können.

Ferner ist rein prinzipiell eine Drehachse 231 dargestellt, die die Halterung 124 durchsetzt, um den Prüfkopf 212 mittels des Antriebs 144, 146 in zuvor erläutertem Umfang verschwenken zu können.

Wesentliche Merkmale der Erfindung sind darin zu sehen, dass der Ultraschallprüfkopf und der optische Sensor synchron verschwenkbar sind, wobei eine Ausrichtung auf eine Dosiereinrichtung erfolgt, mittels der ein Koppelmedium auf die Abdeckung des Ultraschallprüfkopfes gesprüht werden kann.

Eigenständig erfinderisch ist auch das Ermitteln der räumlichen Lage des die zu messenden Schweißungen aufweisenden Prüflings zu dem den Ultraschallprüfkopf aufweisenden Roboter, wobei die CAD-Daten des Prüflings und der Schweißungen in absolute Roboterpositionen transformiert werden, insbesondere unter Verwendung eines 3D-Scanners, mit dem die Position im Raum sowohl des Prüflings als auch der dem die Ultraschallprüfkopfanordnung haltenden Teil des Roboters zugeordneten Kalibrierkörper ermittelt werden, deren CAD-Daten bekannt sind.

Erfinderisch ist auch die Grobausrichtung des Ultraschallkopfes auf die Schweißungen unter Zugrundelegung der exportierten CAD-Daten der Schweißungen und anschließendes Feinausrichten mittels des optischen Sensors und Bildverarbeitung sowie das Aufsetzen des Ultraschallprüfkopfes auf die Schweißung wie Schweißpunkt in Normalenrichtung.

Hervorzuheben ist auch die Bestimmung der Normalenrichtung durch Laufzeitmessungen des Ultraschallmessfeldes des Ultraschallprüfkopfes und/oder die alternative oder redundante Bestimmung der Normalen durch Ermittlung der X-, Y-, Z-Komponenten des Kraftvektors bei auf dem Schweißpunkt aufgesetzten Ultraschallprüfkopf.

Das Vorsortieren der zu prüfenden Schweißpunkte und ggfs. die Aufteilung der Schweißpunkte in Gruppen und sukzessives Überprüfen der Schweißungen der Gruppen sind gleichfalls hervorzuheben.

Weitere hervorzuhebende Merkmale sind:
- Aufsetzen des Ultraschallprüfkopfes mit definierter Kraft auf den Schweißpunkt vorzugsweise zwischen 5 N und 10 N,
- Ermittlung von Schweißfehlern, wie Dornen, die zu einer Beschädigung des Ultraschallprüfkopfes bzw. dessen Abdeckung führen könnten,
- Durchführung von Schweißungen bei Feststellung fehlender Schweißungen.

## Patentansprüche

1. Verfahren zur Überprüfung und/oder Korrektur einer Schweißung (34, 36, 38), wie Schweißpunkt, eines Prüflings (26, 102), wie Kraftfahrzeug, bzw. eines oder mehrerer Teile eines solchen, umfassend die Verfahrensschritte:
- Ausrichten eines von einem Roboter (100) geführten Ultraschallprüfkopfs (16, 128) auf Soll-Position (28, 30, 32) der Schweißung,
- Ermittlung der Ist-Position (34, 36, 38) der Schweißung mittels eines optischen Sensors (22, 130) und Ausrichten des Ultraschallprüfkopfes (16) auf die Ist-Position und Aufsetzen des Ultraschallprüfkopfes in Normalenrichtung der Schweißung,
- Messen der Schweißung,
**dadurch gekennzeichnet,**
**dass** CAD-Daten der Soll-Position der Schweißung (28, 30, 32) zur Verfügung gestellt werden, dass unter Zugrundelegung der CAD-Daten der Schweißung der Ultraschallprüfkopf (16, 128) auf die Soll-Position der Schweißung ausgerichtet wird und dass nach der Ermittlung der Ist-Position (34, 36, 38) der Schweißung mittels des optischen Sensors (22, 130) der Ultraschallprüfkopf kraftgeregelt auf die Schweißung aufgesetzt wird, wobei dem Roboter (100) ortsfest ein oder mehrere Kalibrierkörper (108, 110, 112) bekannter CAD-Daten zugeordnet werden, der bzw. die Kalibrierkörper zusammen mit dem Prüfling (26, 102) bzw. des einen Teils oder der mehreren Teile des Prüflings mittels einer Kamera oder eines 3D-Scanners (107) gemessen werden, und dass mittels 2D-Bilder der Kamera oder 3D-Punktwolke des 3D-Scanners Lage des Prüflings ermittelt und unter Berücksichtigung von CAD-Daten des Prüflings in das Koordinatensystem des Roboters transformiert werden und dass zum Aufsetzen des Ultraschallprüfkopfes (16, 128) in Normalenrichtung der Schweißung (34, 36, 38) die Normalenrichtung mittels Ultraschallsensoren des Ultraschallprüfkopfes (16, 128) und/oder durch Ermittlung der Richtung des Vektors der auf die Schweißung einwirkenden Kraft mittels zumindest eines Kraft- und/oder Momentensensors (20, 123) ermittelt wird.

2. Verfahren nach Anspruch 1,
**dadurch gekennzeichnet,**
**dass** beim Messen der Schweißung der Ultraschallprüfkopf (16, 128) auf die Schweißung mit einer Kraft P mit P ≤ 30 N, insbesondere 5 N ≤ P ≤ 15 N, bevorzugt P in etwa 5 N - 10 N, einwirkt.

3. Verfahren nach Anspruch 1 oder 2,
**dadurch gekennzeichnet,**
**dass** bei einer Überprüfung mehrerer Schweißpunkte zur Überprüfung dieser eine Vorsortierung dahingehend erfolgt, dass nach Überprüfung eines Schweißpunktes sodann nächstliegender zu dem zuvor überprüften Schweißpunkt überprüft wird, und/oder dass die Schweißpunkte in Gruppen aufgeteilt werden, wobei vorzugsweise der Abstand der Schweißpunkte in jeweiliger Gruppen geringer als Abstand zwischen den Gruppen ist, und/oder dass Schweißpunkte in Bezug auf Schweißfehler, wie Dornen, ermittelt werden und ein Messen von einer einen Schweißfehler aufweisenden Schweißung unterbleibt.

4. Verfahren nach zumindest einem der vorhergehenden Ansprüche,
**dadurch gekennzeichnet,**
**dass** der Prüfling (102) von einem zweiten Roboter (118) derart gehalten wird, dass der den Ultraschallprüfkopf (128) führende Roboter (100) ein Optimum, ggf. sämtliche oder zumindest eine Vielzahl der zu prüfenden Schweißungen erreicht.

5. Verfahren nach zumindest einem der vorhergehenden Ansprüche,
**dadurch gekennzeichnet,**
**dass** der Ultraschallprüfkopf schwenkbar zu dem Roboter ausgebildet wird, wobei Kollisionen mit dem Prüfling durch Verschwenken des Ultraschallprüfkopfs vermieden werden.

6. Verfahren nach zumindest einem der vorhergehenden Ansprüche,
**dadurch gekennzeichnet,**
**dass** der Ultraschallprüfkopf und der optische Sensor synchron verschwenkt werden und insbesondere der optische Sensor, wie die Kamera, mit dem Ultraschallprüfkopf verbunden wird.

## Claims

1. Method for testing and/or correction of a weld (34, 36, 38), such as a spot weld, of a test object (26, 102), such as a motor vehicle, or of one or more parts thereof, comprising the method steps:
- alignment of an ultrasonic probe (16, 128) guided by a robot (100) on a target position (28, 30, 32) of the weld,
- determination of the actual position (34, 36, 38) of the weld by means of an optical sensor (22, 130) and alignment of the ultrasonic probe (16) on the actual position, and placing the ultrasonic probe in a normal direction of the weld,
- measurement of the weld,
**charceterized in that**
CAD data of the target position of the weld (28, 30, 32) is made available, on the basis of the CAD data of the weld the ultrasonic probe (16, 128) is aligned on the target position of the weld, and the ultrasonic probe is placed on the weld with controlled force after determination of the actual position (34, 36, 38) of the weld by means of the optical sensor (22, 130), wherein one or more calibration bodies (108, 110, 112) of known CAD data are assigned stationary to the robot (100), the calibration body/bodies together with the test object (26, 102) or with the one or more parts of the test object are measured by means of a camera or 3D scanner (107), and by means of 2D images of the camera or 3D point cloud of the 3D scanner the position of the test object is determined and transformed into the coordinate system of the robot taking into account CAD data of the test object, and wherein for placing the ultrasonic probe (16, 128) in normal direction of the weld (34, 36, 38) the normal direction is determined by means of ultrasonic sensors of the ultrasonic probe (16, 128) and/or by determining the direction of the vector of the force acting on the weld by means of at least one force sensor and/or torque sensor (20, 123).

2. Method according to claim 1,
**wherein**
during measurement of the weld the ultrasonic probe (16, 128) acting on the weld with a force P of P ≤ 30 N, in particular 5 N ≤ P ≤ 15 N, preferably P approximately 5 N - 10N.

3. Method according to claim 1 or 2,
**wherein**
during a test of several spot welds, they are pre-sorted for testing to the effect that after testing of one spot weld the one closest to the previously tested spot weld is then tested, and/or the spot welds are divided up into groups, the spacing of the spot welds in the respective group preferably being less than the spacing between the groups, and/or spot welds are determined in respect of welding defects, such as spikes, and measurement of a weld having a welding defect does not take place.

4. Method according to at least one of the preceding claims,
**wherein**
the test object (102) is held by a second robot (118) such that the robot (100) guiding the ultrasonic probe (128) reaches an optimum number, if possible all or at least a plurality of the welds to be tested.

5. Method according to at least one of the preceding claims,
**wherein**
the ultrasonic probe is designed swivelable relative to the robot, collisions with the test object being avoided by swiveling of the ultrasonic probe.

6. Method according to at least one of the preceding claims,
**wherein**
the ultrasonic probe and the optical sensor are swiveled synchronously, and preferably the ultrasonic probe is connected with the optical sensor, such as a camera.

## Revendications

1. Procédé pour le contrôle et/ou la correction d'une soudure (34, 36, 38), telle qu'un point de soudure d'un élément à contrôler (26, 102), tel qu'un véhicule automobile ou d'une ou de plusieurs pièces de celui-ci, comprenant les étapes de procédé suivantes :
- orientation d'une tête de contrôle à ultrasons (16, 128) guidée par un robot (100) sur une position de consigne (28, 30, 32) de la soudure,
- détermination de la position réelle (34, 36, 38) de la soudure au moyen d'un capteur optique (22, 130) et orientation de la tête de contrôle à ultrasons (16) sur la position réelle et pose de la tête de contrôle à ultrasons dans le sens de la normale de la soudure,
- mesure de la soudure,
**caractérisé en ce**
**que** les données CAO de la position de consigne de la soudure (28, 30, 32) sont fournies, que sur la base des données CAO de la soudure, la tête de contrôle à ultrasons (16, 128) est orientée sur la position de consigne de la soudure et qu'après la détermination de la position réelle (34, 36, 38) de la soudure au moyen du capteur optique (22, 130), la tête de contrôle à ultrasons est posée sur la soudure avec une force régulée, sachant que sont associés au robot (100) de manière fixe un ou plusieurs corps de calibrage (108, 110, 112) des données CAO connues, que le ou les corps de calibrage sont mesurés en même temps que l'élément à contrôler (26, 102) ou l'une ou plusieurs pièces de l'élément à contrôler au moyen d'une caméra ou d'un scanner 3D (107), et que la position de l'élément à contrôler est déterminée au moyen des images 2D de la caméra ou du nuage de points 3D du scanner 3D et est transformée dans le système de coordonnées du robot en tenant compte des données CAO de l'élément à contrôler et que pour poser la tête de contrôle à ultrasons (16, 128) dans le sens de la normale de la soudure (34, 36, 38), le sens de la normale est déterminé au moyen de capteurs à ultrasons de la tête de contrôle à ultrasons (16, 128) et/ou en déterminant la direction du vecteur de la force s'exerçant sur la soudure au moyen d'au moins un capteur de force et/ou de couple (20, 123).

2. Procédé selon la revendication 1,
**caractérisé en ce**
**que** lors de la mesure de la soudure, la tête de contrôle à ultrasons (16, 128) agit sur la soudure avec une force P telle que P ≤ 30 N, notamment 5 N ≤ P ≤ 15 N, de préférence P comprise dans la plage 5 N - 10 N.

3. Procédé selon la revendication 1 ou 2,
**caractérisé en ce**
**que** lors d'un contrôle de plusieurs points de soudure pour contrôler ceux-ci, un pré-tri a lieu de telle sorte qu'après le contrôle d'un point de soudure, le point le plus proche du point de soudure précédemment contrôlé est contrôlé, et/ou que les points de soudure sont répartis en groupes, sachant que de préférence, l'écart entre les points de soudure dans des groupes respectifs est inférieur à l'écart entre les groupes, et/ou que les points de soudure sont déterminés en fonction des erreurs de soudure, telles que des ardillons, et qu'une mesure d'une soudure présentant une erreur de soudure n'est pas effectuée.

4. Procédé selon au moins l'une des revendications précédentes,
**caractérisé en ce**
**que** l'élément à contrôler (102) est tenu par un second robot (118) de telle sorte que le robot (100) guidant la tête de contrôle à ultrasons (128) atteint un optimum, dans le cas échéant l'ensemble ou au moins une multitude des soudures à contrôler.

5. Procédé selon au moins l'une des revendications précédentes,
**caractérisé en ce**
**que** la tête de contrôle à ultrasons est conçue de manière à être pivotable par rapport au robot, sachant que des collisions avec l'élément à contrôler sont évitées en basculant la tête de contrôle à ultrasons.

6. Procédé selon au moins l'une des revendications précédentes,
**caractérisé en ce**
**que** la tête de contrôle à ultrasons et le capteur optique sont basculés de manière synchrone et notamment que le capteur optique, telle que la caméra, est relié à la tête de contrôle à ultrasons.
